Europäisches Patentamt

(19) European Patent Office

Office européen des brevets

(11) Veröffentlichungsnummer: **0 181 832**
**B1**

(12) **EUROPÄISCHE PATENTSCHRIFT**

(45) Veröffentlichungstag der Patentschrift:
**08.11.89**

(21) Anmeldenummer: **85810450.8**

(22) Anmeldetag: **30.09.85**

(51) Int. Cl.⁴: **H 01 B 3/40, C 08 K 3/22,
C 08 K 3/32, C 08 L 63/00**

(54) Selbstlöschende kriechstromfeste Epoxidharzformmasse und ihre Verwendung.

(30) Priorität: **05.10.84 CH 4797/84**

(43) Veröffentlichungstag der Anmeldung:
**21.05.86 Patentblatt 86/21**

(45) Bekanntmachung des Hinweises auf die Patenterteilung:
**08.11.89 Patentblatt 89/45**

(84) Benannte Vertragsstaaten:
**CH DE FR GB IT LI**

(56) Entgegenhaltungen:
**EP-A- 0 012 714
EP-A- 0 031 637
EP-A- 0 078 238
DE-A- 3 239 872
US-A- 3 563 939
US-A- 4 223 071**

**Die Akte enthält technische Angaben, die nach dem
Eingang der Anmeldung eingereicht wurden und die
nicht in dieser Patentschrift enthalten sind.**

(73) Patentinhaber: **CIBA-GEIGY AG, Klybeckstrasse 141,
CH-4002 Basel (CH)**

(72) Erfinder: **Schreiber, Bruno, Dr., Herrenweg 8,
CH-4147 Aesch (CH)**

ACTORUM AG

## Beschreibung

Die vorliegende Erfindung betrifft selbstlöschende kriechstromfeste Epoxidharzformmassen und deren Verwendung zur Herstellung von Formkörpern durch Härtung.

Die europäische Patentschrift Nr. 12 714 beschreibt Epoxidharzformmassen mit verbesserter Rissbeständigkeit, die ein Epoxidharzaddukt, einen Härtungsbeschleuniger, einen Füllstoff und als Härter ein aromatisches Polyol enthalten. Der Füllstoff besteht bevorzugt zu mindestens zwei Dritteln aus Wollastonit.

Die europäische Patentanmeldung Nr. 078 238 A 1 offenbart kriechstromfeste Formmassen auf der Basis von thermoplastischen Polymeren, besonders Polyestern, die im wesentlichen wasserfreies Calciumphosphat enthalten. Zum Verleihen flammhemmender Eigenschaften werden diesen Formmassen übliche halogenhaltige Flammschutzmittel, wie Decabromdiphenyloxid oder Polytribromstyrol, bevorzugt zusammen mit Antimontrioxid, zugesetzt.

Gegenstand der Erfindung sind neue Epoxidharzformmassen, enthaltend

(a) mindestens ein Epoxidharz-Adduktaus einem niedermolekularen Diglycidyläther eines Bisphenols und einem aromatischen oder cycloaliphatischen Diamin, das mindestens 2,0 Epoxidäquivalente pro kg Harz enthält, wovon bis zu 50% durch ein oder mehrere bei Zimmertemperatur feste Epoxidharze ersetzt werden können,

(b) mindestens ein aromatisches Polyol mit mehr als 5 Hydroxyläquivalenten pro kg Polyol als Härter, wobei der Härter in einer solchen Menge vorliegt, dass auf eine Epoxidgruppe 0,5 bis 0,8 Hydroxylgruppen entfallen ,

(c) mindestens einen Härtungsbeschleuniger,

(d) bis zu 70 Gew.% Aluminiumhydroxid und

(e) 1–20 Gew.% und besonders 2–20 Gew.% eines Calciumphosphats, wobei der Gehalt an Komponenten (d) und (e) zusammen höchstens 85 Gew.% beträgt und sich die genannten Gewichtsprozente auf das Gesamtgewicht der Epoxidharzformmasse beziehen.

Obwohl Härter auf der Basis aromatischer Polyole im allgemeinen bezüglich der Kriechstromfestigkeit der damit gehärteten Systeme zu wünschen übrig lassen, werden erfindungsgemäss überraschenderweise ohne Zusatz von umweltbelastenden oder toxischen Füllstoffen, wie Phosphor, organischen Phosphorverbindungen, organischen halogenhaltigen Flammschutzmitteln und/oder Antimontrioxid, selbstlöschende und kriechstromfeste Formmassen bzw. gehärtete Produkte erhalten. Dies stellt vom arbeitshygienischen Standpunkt einen erheblichen Vorteil dar. Die erfindungsgemässen Formmassen zeichnen sich ferner durch gute Verarbeitbarkeit, besonders gute Verarbeitbarkeit nach dem Spritzgussverfahren, und gute thermische und mechanische Eigenschaften, wie gute Formbeständigkeit, gute Biegefestigkeit und gute Kerbschlagzähigkeit, aus. Sie neigen auch wenig zur Belagsbildung in den Pressformen, und die Formlinge lassen sich leicht entformen.

Die Epoxidharz-Addukte (a) sind bevorzugt fest und weisen einen Schmelzpunkt von mindestens 60 °C auf. Gegebenenfalls können auch bis zu 50% des Epoxidharz-Adduktes (a) durch andere bei Zimmertemperatur feste Epoxidharze ersetzt werden.

Vorzugsweise weist der Härter (b) einen Schmelzpunkt von mindestens 60 °C auf und ist der Formmasse in einer solchen Menge zugesetzt, dass auf eine Epoxidgruppe 0,6 bis 0,8 Hydroxylgruppen entfallen.

Das als Härter (b) eingesetzte aromatische Polyol ist vorzugsweise ein von einem Phenol abgeleitetes Polyol.

Eine bevorzugte Gruppe von Härtern (b) sind die Novolake, besonders in saurem Reaktionsmedium erhaltene Umsetzungsprodukte von Phenol, Chlorphenol oder Alkylphenolen mit bis zu 9 C-Atomen im Alkyl mit Aldehyden, wie Acetaldehyd und besonders Formaldehyd. Besonders bevorzugt sind Phenol-, Resorcin-, Kresol- und Xylenolnovolake oder Gemische dieser Novolake.

Eine andere Gruppe von Polyolhärtern (b) sind Polyhydroxybenzole oder (monomere oder polymere) hydroxyphenylierte Kohlenwasserstoffe, wobei der Kohlenwasserstoffrest z.B. 2 bis 10, besonders 2 bis 4, C-Atome enthalten kann. Beispiele bevorzugter Verbindungen dieser Art sind 1, 1, 2, 2-Tetrakis (hydroxyphenyl)äthan, 1, 1, 3-Tris(hydroxyphenyl)propan und 1, 2, 3-, 1, 2, 4- oder 1, 3, 5- Trihydroxybenzol.

In manchen Fällen ist es zweckmässig, die als Härter verwendeten Novolake mit anderen aromatischen oder auch aliphatischen Polyolen abzumischen, z.B. mit aromatischen Diolen, wie Bisphenol-A oder Resorcin.

Bei den verwendeten Epoxidharz-Addukten (a), die vorzugsweise einen Schmelzpunkt von mindestens 60 °C und einen Epoxidgruppengehalt von mindestens 2,5 Äquivalenten pro kg Harz aufweisen, handelt es sich um bekannte Addukte, die z.B. in den amerikanischen Patentschriften 3 409 591, 3 454 421, 3 553 985, 3 963 666 und 3 996 175 beschrieben sind. Als Diglycidyläther von Bisphenolen eignen sich z.B. die Diglycidyläther von Bis(4-hydroxyphenyl)methan (Bisphenol F), 2,2-Bis(4-hydroxyphenyl)propan (Bisphenol A), 2,2-Bis (4-hydroxy-3,5-dibromphenyl) propan (Tetrabrombisphenol A), 1, 1, 2, 2,-Tetrakis-(4-hydroxyphenyl) äthan, 4, 4'-Dihydroxybiphenyl und Bis(4-hydroxyphenyl)sulfon. Bevorzugt sind die niedermolekularen Diglycidyläther von Bisphenol F und insbesondere Bisphenol A.

Zur Herstellung der Epoxidharz-Addukte (a) geht man zweckmässig von niedermolekularen, flüssigen bis halbflüssigen Diglycidyläthern von Bisphenolen, besonders vom Diglycidyläther des Bisphenol A, aus, die bevorzugt mehr als 4,5 Epoxidäquivalente pro kg Harz aufweisen. Durch eine Kettenverlängerung mit einem aromatischen oder cycloaliphatischen Diamin werden sie in eine feste, aber noch reaktionsfähige Form übergeführt. Geeignete aromatische oder cycloaliphatische Diamine sind in den oben erwähnten Patentschriften beschrieben. Die genannten Diamine können rein aromatisch oder rein cycloaliphatisch oder gemischt aliphatisch-aromatisch oder aliphatisch-cycloaliphatisch sein. Als Beispiele seien erwähnt: Diaminocycloalkane und Diaminodicyclohexylalkane, wie 3-Aminomethyl-3, 5, 5-trimethylcyclohexylamin (Isophorondiamin), 4, 4'-Diaminodicyclohexylmethan, 1, 3- und 1, 4-Diaminocyclohexan und 4, 4'-Diamino-3, 3'-dimethyldicyclohexylmethan; Diaminodiphenylalkane, -alkylidene, -äther, -thioäther oder -sulfone, wie 4, 4'-Diaminodiphenylmethan, 2, 2-Bis(4-aminophenyl)propan, 4,4'-Diaminodiphenyläther, -thioäther oder -sulfon, 4,4'-Diamino-3,3'-dichlordiphenylmethan; m-, o- oder p-Phenylendiamin, 4,5-Dimethyl-1,2-phenylendiamin, 2,4-, 2,6- oder 3,4-Diaminotoluol; phenylsubstituierte Alkylendiamine, wie z.B. 1,2-Diamino-1,2-diphenyläthan. Bevorzugte Diamine sind das 4,4'-Diaminodiphenylmethan und das Isophorondiamin.

Zur Modifizierung und Erzielung gewünschter Eigenschaften können bis zu 50% des Epoxidharz-Adduktes (a) durch ein oder mehrere bei Zimmertemperatur feste Epoxidharze ersetzt werden. Beispiele sind Polyglycidyläther von Novolaken und Bisphenolen, N-Glycidylverbindungen, wie Triglycidylisocyanurat, Glycidylhydantoine und Polyglycidylester.

Die Härtungsbeschleuniger (c) werden im allgemeinen in Mengen von 0,1 bis 5 Gew.%, vorzugsweise 0,1 bis 2 Gew.%, eingesetzt, bezogen auf das Gesamtgewicht der Formmasse. Geeignet sind an sich beliebige Verbindungen, welche die Härtungsreaktion zu beschleunigen vermögen. Beispiele sind: Imidazol und Imidazolderivate sowie Salze von Imidazolen mit Polycarbonsäuren oder Polycarbonsäureanhydriden, wie Imidazol, 1-Methylimidazol, 2-Äthylimidazol, 2-Methyl-4-äthylimidazol, 2-Phenylimidazol, Benztriazol, $BF_3$- oder $BCl_3$-Amin-Komplexe, Alkylammoniumhalogenide (z.B. die Chloride und Bromide), wie Tetramethylammoniumchlorid oder Tetrabutylammoniumbromid, Harnstoffe und Derivate davon, wie N-p-Chlorphenyl-N,N'-dimethylharnstoff. Bevorzugt sind das unsubstituierte Imidazol und Imidazolderivate, wie 2-Äthylimidazol.

Das Aluminiumhydroxid (d) [Aluminiumoxidtrihydrat, $Al_2O_3 \cdot 3H_2O$ bzw. $Al(OH_3)$] wird vorzugsweise in einer Menge von 20–50 Gew.%, bezogen auf das Gesamtgewicht der Formmasse, eingesetzt.

Bei den erfindungsgemäss verwendeten Calciumphosphaten (e) handelt es sich bevorzugt um feinteilige und im wesentlichen wasserfreie Calciumphosphate. Gegebenenfalls sind die Phosphate daher vor der Zugabe zu den Formmassen zu trocknen. Die Teilchengrössen des Calciumphosphates kann z.B. 0,1 ibs 100 µm, vorzugsweise 1 bis 50 µm, betragen. Bei den Calciumphosphaten kann es sich um Hydrogenphosphat, Phosphat, Hydroxidapatit, Halogenid-, besonders Fluorid- oder Chloridapatit, ein Metaphosphat, ein Polyphosphat oder ein Ultraphosphat und Gemische von Phosphaten handeln. Beispiele sind: $CaHPO_4$, $Ca_3(PO_4)_2$, $Ca_5(PO_4)_3(OH)$, $Ca_5(PO_4)_3(F,Cl)$, $Ca_2P_2O_7$, $Ca_3(P_3O_9)_2$, $Ca_2(P_4O_{12})$, $Ca_5(P_3O_{10})_2$ und Calciumpolyphosphat. Bevorzugt sind $CaHPO_4$, $Ca_5(PO_4)_3(OH)$ und $Ca_5(PO_4)_3(F,Cl)$ und insbesondere $Ca_3(PO_4)_2$.

Die Menge Calciumphosphat (e) in den erfindungsgemässen Formmassen beträgt mit Vorteil 2–10 Gew.%, bezogen auf das Gesamtgewicht der Formmasse.

Ausser Aluminiumhydroxid und Calciumphosphat, besonders Tricalciumphosphat, können die erfindungsgemässen Formmassen noch weitere Füllstoffe enthalten. Als solche eignen sich z.B. Wollastonit (natürlich vorkommendes oder im Handel erhältliches Calciummetasilikat), Kunststoffasern, wie Polyvinylalkohol-, Polyamid- und Polyesterfasern, Glasfasern, Asbestfasern, Borfasern, Kohlenstoffasern, Glaspulver, Glaskugeln, Quarzmehl, Quarzgutmehl (kristallin-amorphes Quarzmehl), Glimmer, Asbestmeht, Schiefermehl, Kaolin, schamottisiertes Kaolin, Dolomit, Diopsid, Talk, Calciumcarbonate, Kreidemehl, Gips, Bentone, Kieselsäureaerogel (Aerosile), Bariumsulfat, Lithopone, Schwerspat, Titandioxid, Russ, Graphit, Oxid-Pigmente, wie Eisenoxid, oder Metallpulver, wie Aluminium- oder Eisenpulver. Für Isolier-Anwendungen in der Elektrotechnik sollten elektrisch leitende Füllstoffe vermieden werden.

Gemäss einer bevorzugten Ausführungsform enthalten die erfindungsgemässen Formmassen als weiteren Füllstoff Kunststoffasern, wie Polyvinylalkohol- oder Polyesterfasern, Glasfasern und/oder Wollastonit. Dabei beträgt die Gesamtmenge an Aluminiumhydroxid (d), Calciumphosphat (e) und weiterem Füllstoff mit Vorteil 50–75 Gew.% bezogen auf das Gesamtgewicht der Formmasse.

Die erfindungsgemässen Epoxidfrommassen können vor der Härtung in irgendeiner Phase mit üblichen Modifizierungsmitteln versetzt werden, wie z.B. Farbstoffen, Pigmenten, Weichmachern, Verlaufmitteln, Thixotropiermitteln, Formtrennmitteln, Haftvermittlern zwischen Füllstoffen und Harz und auch anderen Kunstharzen, wie Phenoplasten und Aminoplasten. Als Haftvermittler eignen sich z.B. Silane.

Die Herstellung der erfindungsgemässen Epoxidformmassen kann in üblicher Weise mit Hilfe bekannter Mischaggregate (z.B. Extruder, Rührer, Kneter, Walzenstühlen, Mühlen) erfolgen. So kann man z.B. die Einzelkomponenten, gegebenenfalls nach vorherigem Mahlen, intensiv miteinander vermischen (Trockenverfahren). Die Vermischung kann aber auch in einem Kneter erfolgen, wobei man ein Granulat erhält. Vorzugsweise werden die Formmassen im Schmelzverfahren (Kneter oder Extruder) bei Temperaturen von 80 bis 120 °C hergestellt.

Die festen erfindungsgemässen Epoxidformmassen können nach üblichen Verfahren unter Aushärtung zu Formteilen aller Art verarbeitet werden. Die Härtungstemperatur liegt hierbei im allgemeinen zwischen 140 bis 200 °C, vorzugsweise 150 bis 190 °C. Besonders geeignet ist die Formmasse zur Verarbeitung nach dem Spritzgussverfahren mit Schneckenvorplastifizierung. Die Formmassen dienen zur Herstellung hochwertiger Formteile, insbesondere auf dem Gebiet der Elektrotechnik, wie z.B. zur Herstellung von Schalter-, Schaltschützen- und Relais-Teilen, oder auf dem Gebiet der Automobilindustrie, beispielsweise zur Herstellung von Zündverteilern, Zündspulendeckeln, Kerzensteckern und dergleichen. Mit den erfindungsgemässen Formmassen können z.B. auch problemlos Metallteile umhüllt werden.

Die nachfolgenden Beispiele erläutern die Erfindung näher.

Beispiele 1–6

I. Ausgangsprodukte und Herstellung der Formmassen

Epoxidharz A:

(nach US–A 3 996 175): 1000 g eines flüssigen Bisphenol-A-Epoxidharzes mit einem Gehalt von 5,35 Epoxidäquivalenten/kg und einer Viskosität bei 25 °C von 13 500 mPas werden in einem 2-Liter-Reaktionsgefäss vorgelegt und im Ölbad auf 140 °C erwärmt. Während 45 min werden 100 g 4,4-Diaminodiphenylmethan (10,00 $NH_2$/kg) in aufgeschmolzener Form 100 °C warm eingemischt. Die Zugabegeschwindigkeit wird so geregelt, dass die Temperatur der Reaktionsmischung nicht über 150 °C steigt. Nach weiteren 30 min Erwärmung bei derselben Temperatur wird die erhaltene viskose Flüssigkeit abgekühlt und das hellgelbe, harzartige und spröde Pordukt zermahlen. Eigenschaften des Produktes:
Epoxidgehalt =3,00 Äquivalente/kg
Schmelzpunkt (nach Kofler) = 72 °C.

Epoxidharz B:

1000 g desselben Bisphenol-A-Epoxidharzes wie unter a) angegeben werden in einem 2-Liter-Reaktionsgefäss vorgelegt und im Ölbad auf 120 °C erwärmt. Während 45 min werden 87,5 g 3-Aminomethyl-3, 5,5-trimethylcyclohexylamin (Isophorondiamin) aus einem Tropftrichter langsam zugemischt. Die Zugabegeschwindigkeit wird so geregelt, dass die Temperatur der Reaktionsmischung nicht über 140 °C steigt. Inzwischen wird die Temperatur des Bades allmählich auf 140 °C angehoben. Das erhaltene Produkt wird weitere 30 min bei 140 °C gehalten, danach abgekühlt und gemahlen.
Epoxidgehalt =2,9 Äquivalente/kg
Schmelzpunkt (nach Kofler) = 70 °C.

Epoxidharz C:

1000 g eines flüssigen Bisphenol-F-Epoxidharzes mit einem Gehalt von 6,00 Epoxidäquivalenten/kg und einer Viskosität bei 25 °C von 6500 mPas werden in einem 2-Liter-Reaktionsgefäss vorgelegt und im Ölbad auf 140 °C erwärmt. Während 60 min werden 110 g 4,4'-Diaminodiphenylmethan (10,00 $NH_2$/kg) in zehn gleich schweren Portionen dazugegeben und in das heisse Harz eingemischt. Die Zugabegeschwindigkeit wird so geregelt, dass die Temperatur 150 °C nicht übersteigt. Nach weiteren 30 min Erwärmung wird die erhaltene viskose Flüssigkeit abgekühlt, und das harzartige und spröde Produkt wird zermahlen. Eigenschaften des Produkts:
Epoxidgehalt =3,10 Äquivalente/kg
Schmelzpunkt (nach Kofler) = 67 °C.

Härter A:

Fester Kresolnovolak mit 8,5 Hydroxyläquivalenten/kg und einem Schmelzpunkt nach Kofler von 90 °C.

Härter B:

1,1,2,2,-Tetrakis(hydroxyphenyl)äthan mit 7,7 Hydroxyäquivalenten/kg und einem Schmelzpunkt nach Kofler von 112 °C.

Beschleuniger: 2-Äthylimidazol.

Herstellung der Formmassen

Formmassen Nr. 1, 4 und 6: Die in der folgenden Tabelle angegebenen Komponenten werden in einer Gesamtmenge von 1 kg in eine 5-Liter-Laborkugelmühle eingewogen und 15 h gemahlen. Das so erhaltene Pulver wird zu Tabletten gepresst, mittels Hochfrequenz auf ca. 80 °C erwärmt und in 170 °C heissen Stahlpressformen zu Prüfkörpern verarbeitet. Die Presszeit (Härtungszeit) beträgt 10 min bei den 10 mm dicken Prüfkörpern (DIN-Stäbe 120 × 15 × 10 mm) und 4 min bei den bis 4 mm dicken Prüfkörpern.

Formmasse Nr. 2: Die in der Tabelle angegebenen Komponenten werden mit Ausnahme der Glasfasern in einer Gesamtmenge von 3 kg in einen mit Wasser gekühlten Schnellmischer eingewogen und 30 sek bei einer Drehzahl von 1400 Umdrehungen/min homogenisiert. Diese Vormischung wird zusammen mit geschnittenen Glasfasern (Länge 4,5 mm) mit Hilfe von Dosierwaagen in einen Labor-Kokneter eingebracht und bei 100 °C geschmolzen und geknetet. Die austretende Masse wird abgekühlt und zu Granulat vermahlen. Die Verarbeitung des Granulats erfolgt wie für die Formmassen Nr. 1, 4 und 6 beschrieben.

Formmasse Nr. 3: Die in der Tabelle angegebenen Komponenten werden ohne die gemahlenen Polyesterfasern in einer Gesamtmenge von 950 g in eine 5-Liter-Laborkugelmühle abgewogen und 14 h gemahlen. Anschliessend werden die Polyesterfasern dazugegeben und es wird eine weitere Stunde gemahlen. Das erhaltene Pulver wird in einem Zweiwalzenverdichter verdichtet und granuliert. Die Herstellung der Prüfkörper erfolgt wie bei den Formmassen Nr. 1, 4 und 6 beschrieben.

Formmasse Nr. 5: Die in der Tabelle angegebenen Komponenten in einer Gesamtmenge von 1 kg werden in einer 5-Liter-Laborkugelmühle 5 h gemahlen und nachher in einem Zweiwalzenkalender bei 80 °C 3 min geknetet. Das erhaltene Produkt wird abgekühlt, gamahlen und wie oben angegeben zu Prüfkörpern verpresst.

II. Anwendungstechnische Prüfungen

Die Bestimmung der Brennbarkeit erfolgt nach der Norm UL 94, erste Ausgabe vom September 1972 (Underwriters Laboratories) an 1,6 mm dikken Prüfkörpern.

Die Bestimmung der Kriechstromfestigkeit wird nach DIN-Norm 53 480 (Okt. 1976) vorgenommen. Dazu werden 3 mm dicke runde Prüfkörper mit einem Durchmesser von 80 mm verwendet. Zur besseren Differenzierung wird parallel nach dem Verfahren KA und KB gemessen (DIN = Deutsche Industrie-Norm).

Die Biegefestigkeit wird nach ISO 178 bei Raumtemperatur an Prüfkörpern der Abmessungen 80 × 10 × 4 mm bestimmt (ISO = International Standards Organization).

Die Kerbschlagzähigkeit wird nach DIN 53 453 an Prüfkörpern der Abmessungen 120 × 15 × 10 mm ermittelt.

Verarbeitbarkeit im Spritzgiessverfahren mit Schneckenvorplastifizierung

Der Zweck der Prüfung besteht darin, dass man unter erschwerten Bedingungen (hohe Zylinder- und Düsentemperaturen, langen Zykluszeiten) die Formmassen zur Bildung einer ausgehärteten Schicht im Düsenkonus und damit zu nachfolgenden Blockieren der Maschine bringt. Auf Grund der unterschiedlichen Resultate kann man die Formmassen bewerten und einstufen. Man zählt dabei die Anzahl Zyklen und misst mit einer Messuhr (Genauigkeit 0,01 mm) die Dicke der auf der Formmasse aufgebauten Schicht.

Arbeitsbedingungen: Schneckenspritzgiessmaschine Rover 160 BT der Fa. Bühler AG, Uzwil, Schweiz;

Düsentemperatur: 80 °C, Zylindertemperatur: 60 °C,

Drehzahl der Schnecke: 100 Umdrehungen/min,

Staudruck: 20 bar.

Es wird nach folgender Skala bewertet:

| Note | aufgebaute Schicht-dicke (mm) | Anzahl Zyklen |
|---|---|---|
| 1 | 0 | 60 |
| 2 | 0,1 bis 0,5 | 60 |
| 3 | 0,5 | 15–60 |
| 4 | 0,5 | unter 15 |

Die Note 1 bedeutet, dass die Formmasse überhaupt nicht zum Aufbau einer Schicht im Düsenkonus neigt. Note 2 bedeutet, dass sich nach 60 Zyklen eine bis 0,5 mm dicke Schicht bilden darf. Note 3 bedeutet, dass sich eine 0,5 mm dicke Schicht bereits zwischen 15 bis 60 Zyklen bildet. Note 4 schliesslich bedeutet, dass sich eine 0,5 mm dicke Schicht in weniger als 15 Zyklen bildet. Formmassen mit einer Note 4 sind für das beschriebene Verarbeitungsverfahren ungeeignet. Diese Prüfung ist für Epoxidformmassen spezifisch.

Tabelle

| Formmasse Nr. | | 1 | 2 | 3 | 4 | 5 | 6 |
|---|---|---|---|---|---|---|---|
| Epoxidharz A | Gew.% | 21,7 | – | 21,7 | – | 21,7 | – |
| Epoxidharz B | do. | – | 21,6 | – | 18,2 | – | – |
| Epoxidharz C | do. | – | – | – | – | – | 21,6 |
| Härter A | do. | 5,5 | 5,6 | 5,55 | – | 5,5 | 5,65 |
| Härter B | do. | – | – | – | 5,4 | – | – |
| 2-Äthylimidazol (Beschleuniger) | do. | 0,2 | 0,2 | 0,15 | 0,2 | 0,2 | 0,15 |
| Naturwollastonit | do. | 31,3 | 31,3 | 16,3 | 29,9 | 31,3 | – |
| Aluminiumhydroxid | do. | 35,0 | 35,0 | 35,0 | 35,0 | 35,0 | 47,30 |
| Tricalciumphosphat | do. | 5,0 | 5,0 | 5,0 | 5,0 | 5,0 | 4,00 |
| Glasfasern 4,5 mm | do. | – | – | 15,0 | – | – | 20,00 |
| Polyesterfasern (Poly(1,4–butylen–terephthalat) | do. | – | – | – | 5,0 | – | – |
| OP–Wachs (Trennmittel der Fa. Hoechst) | do. | 1,0 | 1,0 | 1,0 | 1,0 | 1,0 | 1,00 |
| Gasruss Gew.% | | 0,3 | 0,3 | 0,3 | 0,3 | 0,3 | 0,3 |
| Brennbarkeit UL 94, 1,6 mm Stufe | | V–0 | V–0 | V–0 | V–0 | V–0 | V–0 |
| Kriechstromfestigkeit nach DIN 53 480 | | | | | | | |
| KB–Methode, Volt | | >600 | >600 | >600 | >600 | >600 | >600 |
| KA–Methode, Stufe | | KA3c | KA3c | KA3c | KA3c | KA3c | KA3c |
| Spritzgiess–Prüfung, Stufe | | 1 | 1 | 1 | 2 | 1 | 1 |

Tabelle Fortsetzung

| Formmasse Nr. | 1 | 2 | 3 | 4 | 5 | 6 |
|---|---|---|---|---|---|---|
| Kerbschlagzähigkeit DIN 53 453 kJ/m² | 1,8 | 1,9 | 5,0 | 4,0 | 1,9 | 4,2 |
| Biegefestigkeit ISO 178 N/mm² | 80,0 | 83,0 | 125,0 | 78,0 | 85,0 | 138,0 |

Aus den obigen Daten ist ersichtlich, dass sich die erfindungsgemässen Formmassen durch einen hohen Grad an Nicht-Brennbarkeit, gute Verarbeitbarkeit, hohe Kriechstromfestigkeit und gute Kerbschlagzähigkeit und Biegefestigkeit auszeichnen. Hohe Kerbschlagzähigkeiten werden insbesondere bei Zusatz von Verstärkerfüllstoffen erzielt.

**Patentansprüche**

1. Epoxidharzformmassen, enthaltend

(a) mindestens ein Epoxidharz-Addukt aus einem niedermolekularen Diglycidyläther eines Bisphenols und einem aromatischen oder cycloaliphatischen Diamin, das mindestens 2,0 Epoxidäquivalente pro kg Harz enthält, wovon bis zu 50% durch ein oder mehrere bei Zimmertemperatur feste Epoxidharze ersetzt werden können,

(b) mindestens ein aromatisches Polyol mit mehr als 5 Hydroxyläquivalenten pro kg Polyol als Härter, wobei der Härter in einer solchen Menge vorliegt, dass auf eine Epoxidgruppe 0,5 bis 0,8 Hydroxylgruppen entfallen,

(c) mindestens einen Härtungsbeschleuniger,

(d) bis zu 70 Gew.% Aluminiumhydroxid und

(e) 1–20 Gew.% eines Calciumphosphates, wobei der Gehalt an Komponenten (d) und (e) zusammen höchstens 85 Gew.% beträgt und sich die genannten Gewichtsprozente auf das Gesamtgewicht der Epoxidharzformmassen beziehen.

2. Formmasse nach Anspruch 1, dadurch gekennzeichnet, dass das aromatische Polyol ein Phenol-, Resorcin-, Kresol- oder Xylenolnovolak oder ein Gemisch dieser Novolake ist.

3. Formmasse nach Anspruch 1, dadurch gekennzeichnet, dass das aromatische Polyol 1, 1, 2, 2-Tetrakis (hydroxyphenyl)äthan, 1, 1, 3-Tris (hydroxyphenyl) propan oder 1, 2, 3-, 1,2,4- oder 1,3,5-Trihydroxybenzol ist.

4. Formmasse nach Anspruch 1, dadruch gekennzeichnet, dass die Komponente (a) ein Addukt aus einem niedermolekularen Bisphenol-A-Diglycidyläther und 4,4'-Diaminodiphenylmethan oder Isophorondiamin ist.

5. Formmasse nach Anspruch 1, dadurch gekennzeichnet, dass der Härtungsbeschleuniger (c) in einer Menge von 0,1 bis 5, vorzugsweise 0,1 bis 2 Gew.%, enthalten ist, bezogen auf das Gesamtgewicht der Formmasse.

6. Formmasse nach Anspruch 1, dadurch gekennzeichnet, dass der Härtungsbeschleuniger (c) unsubstituiertes Imidazol oder ein Imidazolderivat ist.

7. Formmasse nach Anspruch 1, dadruch gekennzeichnet, dass das Aluminiumhydroxid (d) in einer Menge von 20–50 Gew.%, bezogen auf das Gesamtgewicht der Formmasse, vorliegt.

8. Formmasse nach Anspruch 1, worin das Calciumphosphat (e) ein feinteiliges und im wesentlichen wasserfreies Calciumphosphat, vorzugsweise Tricalciumphosphat, ist.

9. Formmasse nach Anspruch 1, dadurch gekennzeichnet, dass das Calciumphosphat (e) in einer Menge von 2–10 Gew.%, bezogen auf das Gesamtgewicht der Formmasse, vorliegt.

10. Formmasse nach Anspruch 1, 7 und 9 die als weitere Füllstoffe Kunststoffasern, Glasfasern und/oder Wollastonit enthält, wobei der Anteil an Aluminiumhydroxid (d), Calciumphosphat (e) und weiterem Füllstoff 50–75 Gew.%, bezogen auf das Gesamtgewicht der Formmasse, beträgt.

11. Verwendung von Formmassen nach Anspruch 1 zur Herstellung von Formkörpern durch Härtung.

**Revendications**

1. Matières à mouler à base de résines époxydiques, qui contiennent:

(a) au moins un produit d'addition d'une résine époxydique qui dérive d'un éther diglycidylique de bisphénol à bas poids moléculaire et d'une diamine aromatique ou cycloaliphatique et qui contient au moins 2,0 équivalents d'époxy par kilogramme de la résine, cette résine pouvant être remplacée, en une proportion d'au plus 50%, par une ou plusieurs résines époxydiques solides à la température ambiante,

(b) au moins un polyol aromatique à plus de 5 équivalents d'hydroxy par kilogramme de polyol, comme durcisseur, la quantité du durcisseur étant telle qu'il y ait de 0,5 à 0,8 radical hydroxy par radical époxy,

(c) au moins un accélérateur de durcissement,

(d) au plus 70% en poids d'hydroxyde d'aluminium, et

(e) de 1 à 20% en poids d'un phosphate de calcium, la teneur en composantes (d) et (e), considérées ensemble, étant d'au plus 85% en poids, et les pourcentages pondéraux mentionnés étant rapportés au poids total de la matière à mouler à base de résine époxydique.

2. Matière à mouler selon la revendication 1 caractérisée en ce que le polyol aromatique est une novolaque dérivant du phénol, du résorcinol, d'un crésol ou d'un xylénol, ou un mélange de ces novolaques.

3. Matière à mouler selon la revendication 1 caractérisée en ce que le polyol aromatique est le tétrakis-(hydroxyphényl)-1,1,2,2 éthane, le tris-(hydroxyphényl)-1,1,3 propane ou le trihydroxy-1,2,3, -1,2,4 ou -1,3,5 benzène.

4. Matière à mouler selon la revendication 1 caractérisée en ce que la composante (a) est un produit d'addition dérivant d'un éther diglycidylique du bis-phénol A à bas poids moléculaire et du diamino-4,4' diphényl-méthane ou de l'isophorone-diamine.

5. Matière à mouler selon la revendication 1 caractérisée en ce que l'accélérateur de durcissement (c) est contenu en une quantité de 0,1 à 5% en poids, de préférence de 0,1 à 2% en poids, par rapport au poids total de la matière à mouler.

6. Matière à mouler selon la revendication 1 caractérisée en ce que l'accélérateur de durcissement (c) est l'imidazole non substitué ou un dérivé de l'imidazole.

7. Matière à mouler selon la revendication 1 caractérisée en ce que l'hydroxyde d'aluminium (d) se trouve en une quantité de 20 à 50% en poids par rapport au poids total de la matière à mouler.

8. Matière à mouler selon la revendication 1 dans laquelle le phosphate de calcium (e) est un phosphate de calcium en fines particules et pratiquement anhydre, de préférence le phosphate tricalcique.

9. Matière à mouler selon la revendication 1 caractérisée en ce que le phosphate de calcium (e) se trouve en une quantité de 2 à 10% en poids par rapport au poids total de la matière à mouler.

10. Matière à mouler selon l'une quelconque des revendications 1, 7 et 9, qui contient, comme charges supplémentaires, des fibres en matières plastiques, des fibres en verre et/ou de la wollastonite, la proportion de l'hydroxyde d'aluminium (d), du phosphate de clacium (e) et de la charge supplémentaire étant comprise entre 50 et 75% en poids par rapport au poids total de la matière à mouler.

11. Application de matières à mouler selon la revendication 1 à la fabrication d'objets moulés par durcissement.

## Claims

1. An epoxy resin moulding composition containing

(a) at least one epoxy resin adduct of a low molecular diglycidyl ether of a bisphenol and an aromatic or cycloaliphatic diamine that contains not less than 2,0 epoxide equivalents/kg of resin, up to 50% of which may be replaced by one or more epoxy resins which are solid at room temperature,

(b) at least one aromatic polyol containing more than 5 hydroxyl equivalents/kg of polyol as hardener, the amount of said hardener being such that the content of hydroxyl groups is 0,5 to 0,8 per epoxy group,

(c) at least one curing accelerator,

(d) up to 70% by weight of aluminium hydroxide, and

(e) 1–20% by weight of a calcium phosphate, the amount of components (d) and (e) together being not more than 85% by weight and the percentages by weight mentioned being based on the total weight of the epoxy resin moulding composition.

2. A moulding composition according to claim 1, wherein the aromatic polyol is a phenol, resorcinol, cresol or xylenol novolak or a mixture of said novolaks.

3. A moulding composition according to claim 1, wherein the aromatic polyol is 1,1,2,2-tetrakis-(hydroxyphenyl)ethane, 1,1,3-tris(hydroxyphenyl)propane or 1,2,3-, 1,2,4- or 1,3,5-trihydroxybenzene.

4. A moulding composition according to claim 1, wherein component (a) is an adduct of a low molecular diglycidyl ether of bisphenol A and 4,4'-diaminodiphenylmethane or isophorone-diamine.

5. A moulding composition according to claim 1, which contains the curing accelerator (c) in an amount of 0,1 to 5% by weight, preferably 0,1 to 2% by weight, based on the total weight of said moulding composition.

6. A moulding composition according to claim 1, wherein the curing accelerator (c) is unsubstituted imidazole or an imidazole derivative.

7. A moulding composition according to claim 1, wherein the aluminium hydroxide (d) is present in an amount of 20–50% by weight, based on the total weight of said moulding composition.

8. A moulding composition according to claim 1, in which the calcium phosphate (e) is a finely particulate and substantially anhydrous calcium phosphate, preferably tricalcium phosphate.

9. A moulding composition according to claim 1, wherein the calcium phosphate (e) is present in an amount of 2–10% by weight, based on the total weight of said moulding composition.

10. A moulding composition according to claims 1, 7 and 9, which contains synthetic fibres, glass fibres and/or wollastonite as additional fillers, the amount of aluminium hydroxide (d), calcium phosphate (e) and additional filler being 50–75% by weight, based on the total weight of said moulding composition.

11. Use of moulding composition according to claim 1 for the preparation of moulded articles by curing.